# EUROPEAN PATENT SPECIFICATION

(11) **EP 0 728 802 B1**
(45) Date of publication and mention of the grant of the patent: **01.10.1997**
(21) Application number: 95200394.5
(22) Date of filing: 18.02.1995
(51) Int. Cl.: C08K 3/00, C08L 101/00, C08L 69/00

(54) **Thermoplastic composition with filler and polyalkylene glycol**
Thermoplastische Zusammensetzung mit Füllstoff und Polyalkylenglykol
Composition thermoplastique contenant de la charge et du glycole de polyalkylène

(43) Date of publication of application: 28.08.1996
(73) Proprietor: GENERAL ELECTRIC COMPANY, Schenectady, NY 12345 (US)
(72) Inventor: van de Grampel, Hendrik Theodorus, NL-4600 AC Bergen op Zoom (NL); Fontana, Luca Pietro, NL-4600 AC Bergen op Zoom (NL); Sacharias, Antonius Leonardus, NL-4600 AC Bergen op Zoom (NL)
(74) Representative: Grever, Frederik

(56) References cited:
- EP-A- 0 062 820
- DE-A- 2 854 136
- DE-A- 4 325 548
- DATABASE WPI Section Ch, Week 8837 Derwent Publications Ltd., London, GB; Class CH, AN 88-260844 & JP-A-63 189 439 (TOYOBO KK) , 5 August 1988

## Description

The present invention deals with a composition which comprises:
(A) a resin selected from polycarbonates, polyestercarbonates, polyethylene terephthalates, polybutylene terephthalates, polycyclohexyl terephthalates, polyetheresters, polyesteramides, copolymers of any of the mentioned resins and mixtures of two or more of the mentioned resins or copolymers;
(B) from 10-85% by weight of a filler, selected from zinc oxide, barium sulfate, zirconium oxide, zirconium silicate and mixtures of two or more of the mentioned fillers.

Compositions comprising components A and B are known from EP-A-423 508; EP-A-423 509 and EP-A-423 510. The known compositions possess a unique combination of properties as indicated in above mentioned patent applications.

The compositions described in above mentioned patent applications have been used for forming parts by injection molding or by extrusion. One application lies in the use of the known compositions for the extrusion of sheet products.

It has been found that the surface quality of the objects formed out of the compositions according to the invention can be further improved by incorporating in the composition a polyalkylene glycol (C). By incorporating a component C the cleanability of the surface improved and the tendency to staining and marking can be reduced. By incorporating a component C the impact strength could also be improved.

The invention thus relates to compositions which besides above mentioned components A and B further comprise:
(C) from 0.1-4% by weight of a polyalkylene glycol homopolymer or copolymer, wherein all quantities have been calculated with respect to the total weight of components A, B and C.

### Detailed description of the invention.

The composition of the invention comprises at least the following three types of constituents:
A. a resin as indicated in claim 1,
B. a filler as indicated in claim 1 and
C. a polyalkylene glycol homopolymer or copolymer.

### A. Resin

The composition of the invention comprises a resin selected from
(A) a resin selected from polycarbonates, polyestercarbonates, polyethylene terephthalates, polybutylene terephthalates, polycyclohexylterephthalates, polyetheresters, polyesteramides, copolymers of any of the mentioned resins and mixtures of two or more of the mentioned resins or copolymers;

The above mentioned resins are well known polymers which have been described extensively in the literature. Particularly suitable are the polycarbonates or polyestercarbonates derived from bisphenol A.

A preferred resin A in the composition of the invention comprises a blend of a polyethylene terephthalate, a polybutylene terephthalate and a polycarbonate.

### B. Filler

The composition of the invention comprises a filler chosen from: zinc oxide, barium sulfate, zirconium oxide, zirconium silicate and mixtures of two or more of the mentioned fillers.

A preferred filler is barium sulfate. The quantity of the filler (B) is 10-85% by weight, more preferably between 15-40% by weight.

### C. Polyalkylene glycol homopolymer or copolymer.

Polyalkylene glycol homopolymers and copolymers and processes for making them are known per se. Preferred polyalkylene glycols are polyalkylene glycols with or without special endgroups (such as methoxygroups), polyethylene glycol, polyethylene propylene glycol copolymers, polypropylene glycol, copolymers of a polyalkylene glycol and polydimethylsiloxanes or mixtures of two or more said polyalkylene glycols.

A silicone oil has the same beneficial effect as the polyalkylene glycol. A combination of a polyalkylene glycol and a silicone oil is suitable.

The quantity of the polyalkylene glycol is chosen between 0.1-4% by weight, more preferably 0.5-2.5% by weight.

The composition according to the invention can further comprise components such as fillers others than the ones listed as component B (for example talc), non-reinforcing fibers such as pigmented short fibers and reinforcing fibers such as glass fibers, stabilizers, anti-oxidants, lubricants, release agents, silicone oils, agents to improve the impact, flame retardants, pigments.

Materials suitable as an agent to improve the impact include SBR, AB and ABA block copolymers such as Kraton and Kraton-G; styrene-butadiene modified acrylics; core-shell acrylics. These and other impact modifiers are described in US 4,034,013; 4,096,202 and 4,180,494 and in Modern Plastics Encyclopedia, 1988 Edition, page 160. Effective amounts range from 1-20% by weight of the total composition.

### Example I; comparative Examples A, II

In the preparation of a blend according to the invention and of a blend for comparative purposes the following ingredients were used:
- PBT:: a standard polybutylene terephthalate resin.
- PC:: a standard polycarbonate resin derived from bisphenol A.
- PET:: a standard polyethylene terephthalate resin
- BaSO₄: barium sulfate filler
- PEG:: polyethylene glycol end-capped with hydroxylgroups; with a number average molecular weight of 3350.
- SEBS:: a styrene - ethylene/butylene - styrene triblock copolymer. The styrene blocks have a weight average molecular weight of 27,000; the e/b-block of 126,000.
- STAB:: a standard stabilizer package
- Sil:: a polydimethylsiloxane fluid

The indicated ingredients were compounded into a twin-screw extruder. The compounded product was pelletized. The pellets were injection molded into plaques (about 3,5 mm thick). Another quantity of pellets were extruded into sheet (about 2,5 mm thick).

The surface quality in particular the tendency to marking and ease of cleaning (cleanability) was tested as follows:

The test samples were first finished by treatment with: 60 and 30 micron sanding pads, # 7445 and #7441 3M Scotch-Brite pads, and a 3M buffing pad (in the indicated order).

Testing carried out was fingernail marking i.e. scratching the surface with fingernails, with visual judgment of surface performance by a five person panel.

The compositions and the results are shown in Table A herebelow:

**Table A**

| Example | A | I | II |
|---|---|---|---|
| Composition (parts by weight) | | | |
| . PBT | 17 | 17 | 17 |
| . PC | 27.8 | 26.2 | 26.2 |
| . PET | 9.8 | 9.8 | 9.8 |
| . BaSO₄ | 37 | 37 | 37 |
| . PEG | - | 1 | - |
| . SEBS | 7.5 | 7.5 | 7.5 |
| . Sil | - | - | 1 |
| . ZnPO₄ | - | 0.6 | 0.6 |
| . STAB | 0.9 | 0.9 | 0.9 |

| Properties | | | |
|---|---|---|---|
| Marking cleanability | | | |
| . of injection molded plaques | 2* | 1* | 1* |
| . extruded sheet | 2* | 1* | 2* |

| | | | |
|---|---|---|---|
| * 1 = difficult to mark, the minor marks can be easily removed by wiping with a person's fingers or with a dry piece of paper. | | | |
| * 2 = marks easily, marks cannot be removed with fingers or dry paper. | | | |

As can be seen from the results in the above table the compositions according to the invention have less tendency to marking and possess improved cleanability which is of importance for many applications.

### Example III and comparative Example B.

The compositions of Example I and A were made for a second time. (Examples III and B respectively).

The products obtained were extruded into sheet. The Izod unnotched impact strength was determined in accordance with ASTM D256, the Dynatup multi-axial impact was determined in accordance with ASTM D3763.

The values were as follows (Table B).

**(Table B)**

| Example | III | B (Comparative) |
|---|---|---|
| Impact strength: | | |
| . Izod (kJ/m) | 2.0 | 1.5 |
| . Dynatup (J) | 24.4 | 17.6 |

Staining tests with tomato - ketchup and red chili sauce showed that the composition of the invention has an improved cleanability.

As can be seen the composition of the invention has a better impact strength.

It has also been found that the surface of objects made out of the compositions according to the invention can be better glued to a wooden surface.

## Claims

1. A thermoplastic composition which comprises:
(A) a resin selected from polycarbonates, polyestercarbonates, polyethylene terephthalate, polybutylene terephthalates, polycyclohexyl terephthalates, polyetheresters, polyesteramides, copolymers of any of the mentioned resins and mixtures of two or more of the mentioned resins or copolymers;
(B) from 10-85% by weight of a filler, selected from zinc oxide, barium sulfate, zirconium oxide, zirconium silicate and mixtures of two or more of the mentioned fillers wherein the composition further comprises:
(C) from 0.1-4% by weight of a polyalkylene glycol homopolymer or copolymer, wherein all quantities have been calculated with respect to the total weight of components A, B and C.

2. Composition of claim 1, wherein the polyalkylene glycol (C) is chosen from a polyalkylene glycol which has been provided which special endgroups, polyethylene glycol, polyethylene propylene glycol copolymers, polypropylene glycol, copolymers of a polyalkylene glycol and polydimethylsiloxanes or mixtures of two or more said polyalkylene glycols.

3. Composition of claim 1, wherein component A comprises of a blend of a polyethylene terephthalate, a polybutylene terephthalate and a polycarbonate.

4. Composition of claim 1, wherein constituent B is bariumsulfate.

5. Composition of claim 1, wherein the composition further comprises an agent to improve the impact strength.

6. Composition of claim 1 wherein the composition further comprises a silicone oil.

7. Extruded sheet made out of the composition of any of the previous claims.

## Patentansprüche

1. Thermoplastische Zusammensetzung, die umfaßt:
(A) Ein Harz, ausgewählt aus Polycarbonaten, Polyestercarbonaten, Polyäthylenterephthalat, Polybutylenterephthalaten, Polycyclohexylterephthalaten, Polyätherestern, Polyesteramiden, Copolymeren von beliebigen der vorerwähnten Harze und Mischungen aus zwei oder mehr der erwähnten Harze oder Copolymere;
(B) 10 - 85 Gew.-% eines Füllstoffes, ausgewählt aus Zinkoxid, Bariumsulfat, Zirkoniumoxid, Zirkoniumsilikat und Mischungen aus zwei oder mehr der vorerwähnten Füllstoffe, wobei die Zusammensetzung weiter enthält:
(C) 0,1 - 4 Gew.-% eines Polyalkylenglykol-Homopolymeren oder -Copolymeren, worin alle Mengenangaben mit Bezug auf das Gesamtgewicht der Bestandteile A, B und C berechnet sind.

2. Zusammensetzung nach Anspruch 1, worin das Polyalkylenglykol (C) ausgewählt ist aus einem Polyalkylenglykol, welches mit speziellen Endgruppen versehen worden ist, Polyäthylenglykol, Polyäthylenpropylenglykol-Copolymere, Polypropylenglykol, Copolymere eines Polyalkylenglykols und Polydimethylsiloxanen, oder Mischungen aus zwei oder mehr der besagten Polyalkylenglykole.

3. Zusammensetzung nach Anspruch 1, worin die Komponente A eine Mischung aus einem Polyäthylenterephthalat, einem Polybutylenterephthalat und einem Polycarbonat umfaßt.

4. Zusammensetzung nach Anspruch 1, worin der Bestandteil B Bariumsulfat ist.

5. Zusammensetzung nach Anspruch 1, worin die Zusammensetzung weiterhin ein Mittel zur Verbesserung der Schlagfestigkeit enthält.

6. Zusammensetzung nach Anspruch 1, worin die Zusammensetzung weiterhin ein Silikonöl enthält.

7. Extrudierte Folie, die aus der Zusammensetzung nach einem der vorstehenden Ansprüche hergestellt ist.

## Revendications

1. Composition thermoplastique qui comprend :
(A) une résine choisie parmi les polycarbonates, poly(ester carbonate) poly(éthylène téréphtalate), poly(butylène téréphtalate), poly(téréphtalate de cyclohexyle), poly(éther ester) poly(ester amide), copolymères de n'importe quelles résines mentionnées et mélanges de deux résines ou copolymères mentionnés ou plus;
(B) de 10 à 85 % en poids d'une charge, choisie parmi l'oxyde de zinc, le sulfate de baryum, l'oxyde de zirconium, le silicate de zirconium, et des mélanges de deux charges mentionnées ou plus, sachant que la composition comprend en outre :
(C) de 0,1 à 4 % en poids d'un homopolymère ou copolymère de poly(alkylèneglycol),
dans laquelle toutes les quantités ont été calculées par rapport au total des poids des composants A, B et C.

2. Composition conforme à la revendication 1, dans laquelle le poly(alkylèneglycol) (C) est choisi parmi un poly(alkylèneglycol) qui comporte des groupes terminaux spéciaux, un poly(éthylèneglycol), des copolymère (éthylène/propylène)-glycol, un poly(propylèneglycol) des copolymères de poly(alkylèneglycol) et de polydiméthylsiloxanes ou des mélanges de deux desdits poly(alkylèneglycol) ou plus.

3. Composition conforme à la revendication 1, dans laquelle le composant A comprend un mélange d'un poly(éthylène téréphtalate), d'un poly(butylène téréphtalate) et d'un polycarbonate.

4. Composition conforme à la revendication 1, dans laquelle le constituant B est le sulfate de baryum.

5. Composition conforme à la revendication 1, dans laquelle la composition comprend en outre un agent pour améliorer la résistance au choc.

6. Composition conforme à la revendication 1, dans laquelle la composition comprend en outre une huile silicone.

7. Feuille extrudée fabriquée à partir de la composition conforme à l'une quelconque des précédentes revendications.
